# EUROPÄISCHE PATENTANMELDUNG

(11) **EP 3 179 372 A1**
(43) Veröffentlichungstag der Anmeldung: **14.06.2017**
(21) Anmeldenummer: 16020479.8
(22) Anmeldetag: 05.12.2016
(51) Int. Cl.: G06F 11/36, G01R 31/00

(54) **VERFAHREN UND VORRICHTUNG ZUM TESTEN EINER MEHRZAHL VON STEUEREINHEITEN EINER TECHNISCHEN EINHEIT**

(30) Priorität: 07.12.2015 DE 102015121225
(71) Anmelder: Deutsche Telekom AG, 53113 Bonn (DE)
(72) Erfinder: Steigemann, Ralph, 39365 Wefensleben (DE)
(74) Vertreter: Raible Deissler Lehmann Patentanwälte PartG mbB

(57) **Zusammenfassung**

Die vorliegende Erfindung betrifft ein Verfahren zum Testen einer Mehrzahl von Steuereinheiten einer technischen Einheit, bei dem jeder Steuereinheit der Mehrzahl von Steuereinheiten jeweils eine vordefinierte spezifische Überwachungsfunktion (A, B, ..., X) zugeordnet wird und zum Testen der Mehrzahl von Steuereinheiten notwendige Daten an mindestens einem Prüfstand (32, 33) von mindestens einem Sensor aufgenommen, zu Sensordaten (a1, a2, b, c) verarbeitet und an mindestens einen Datenbus zur Weiterleitung abgegeben werden, wobei die jeweiligen Sensordaten (a1, a2, b, c) in Abhängigkeit ihrer Relevanz für die jeweiligen Steuereinheiten einer oder mehreren der vordefinierten und zur Ausführung auf mindestens einer Recheneinheit (30) hinterlegten Überwachungsfunktionen (A, B, ..., X) zugeordnet und mit ihrem jeweiligen Eintreten über den Datenbus und eine Schnittstelle der mindestens einen Recheneinheit (30) von den ihnen jeweils zugeordneten Überwachungsfunktionen (A, B, ..., X) aufgenommen, verarbeitet und ausgewertet werden. Die vorliegende Erfindung betrifft ferner eine entsprechende Testvorrichtung.

## Beschreibung

### Technisches Gebiet

Die vorliegende Erfindung betrifft ein Verfahren und eine entsprechende Vorrichtung zum Testen einer Mehrzahl von Steuereinheiten bzw. Funktionseinheiten einer technischen Einheit, insbesondere eines Kraftfahrzeugs.

### Beschreibung des Standes der Technik

In modernen Fahrzeugen werden zunehmend kleine Bordcomputer, sogenannte Steuergeräte eingebaut. Diese Steuergeräte werden in der Regel von verschiedenen Fremdfirmen nach Vorgaben einzeln entwickelt und müssen zum Qualitätscheck im Verbund getestet werden. Derzeit wird dabei jede einzelne Funktion separat getestet, wie bspw. dass bei Betätigung eines Blinkschalters ein entsprechender Blinker angeht. Danach kommt die nächste Funktion, wie bspw. die eines Bremslichts. Diese Vorgehensweise hat den Vorteil, dass mögliche Störeinflüsse von anderen Funktionen eliminiert werden können und eine ausschließliche Konzentration auf die jeweilig aktuell getestete Funktion gegeben ist.

Im Laufe der Zeit enthalten jedoch die Fahrzeuge immer mehr Steuergeräte, aktuell bis zu 50 Stück. Die Anzahl der sogenannten Kommunikationsbusse hat sich stark erhöht und die Komplexität von Testfunktionen ist dadurch drastisch gestiegen. In der gestiegenen Komplexität der KFZ-Elektronik und -Software sind auch die Anforderungen an Testverfahren in der Entwicklung gewachsen. Hardware-in-the-loop-Simulatoren und Laborauto-Aufbauten sind in der Entwicklungsabteilung vieler Fahrzeughersteller und Systemlieferanten zu finden. Als Ergänzung zum Fahrversuch decken solche Anlagen wichtige Teilaufgaben bei der Entwicklung und Integration von KFZ-Elektronik ab, vor allem in frühen Entwicklungsphasen. Es hat sich jedoch gezeigt, dass diese Verfahren nur bedingt für grundlegende, sich häufig wiederholende Prüfaufgaben geeignet sind, die den Entwicklungsprozess im hohen Maße prägen und die Zuverlässigkeit eines Serienfahrzeugs signifikant beeinflussen.

Um Prüfaufgaben zuverlässig durchführen zu können, wurden automatische Testverfahren bzw. Testfunktionen zum Testen von elektronischen Steuergeräten in einem Fahrzeug entwickelt. Die Aufgabe derartiger automatischer Testverfahren bzw. von zu aktivierenden Testfunktionen, im folgenden auch Überwachungsfunktionen genannt, ist eine Verifizierung einer jeweiligen Funktion elektronischer Steuergeräte und deren Peripherie, typischerweise im Rahmen der Entwicklung und Serienfreigabe. Dabei wird in der Regel ein Verhalten einer Komponente eines Steuergeräts bzw. eines Steuergeräts mit einem Sollverhalten der Komponente bzw. des Steuergeräts verglichen. Bislang wurden, wie bereits voranstehend erwähnt, einzelne Testfälle sukzessive abgearbeitet.

Als Testfall ist im Rahmen der vorliegenden Offenbarung mindestens eine Durchführung mindestens einer Überwachungsfunktion für eine Komponente eines Steuergeräts bzw. für ein Steuergerät zu verstehen. Eine Überwachungsfunktion ist jeweils einer Komponente eines Steuergeräts bzw. einem Steuergerät spezifisch zugeordnet und dient dazu, mithilfe von mit einem jeweiligen Sensor aufgenommenen Daten eine Funktionsweise der jeweiligen Komponente bzw. des jeweiligen Steuergeräts zu überprüfen und auszuwerten.

Zu Beginn wird ein zu testendes Steuergerät initialisiert und in einen definierten Betriebszustand versetzt, in dem bestimmte Werte bspw. für eine Versorgungsspannung, Sensorsignale und Werte auf CAN-Datenbussen vorgegeben werden. Anschließend wird eine Reaktion der zu testenden Komponente bzw. des zu testenden Steuergeräts erfasst und bewertet, bspw. durch Messung von Ausgangssignalen, Analyse von Datenkommunikation und Auslesen eines Fehlerspeichers über eine Diagnoseschnittstelle. Diese Reaktion wird mit einer vordefinierten spezifischen Reaktion verglichen. Das Vergleichsergebnis wird in einem Testprotokoll eingetragen. Durch Aneinanderreihen zahlreicher derartiger Testfälle für verschiedene Komponenten eines Steuergeräts oder für verschiedene Steuergeräte wird eine komplette Funktionsprüfung des entsprechenden Steuergeräts bzw. der gesamten KFZ-Elektronik ermöglicht. Bei Testende erhält ein Anwender einen übersichtlichen Testbericht mit einer detaillierten Beschreibung evtl. aufgetretener Abweichungen von einer vorgegebenen Spezifikation bzw. von einem aus der Spezifikation abgeleiteten Gutmodell.

Ein aktueller allgemeiner Testansatz zur Durchführung eines Testfalls in einem hochkomplexen System, wie es bspw. in einem Kraftfahrzeug aktuell vorliegt, besteht darin, dass alle auftretenden Ereignisse bzw. Signale, d. h. von einem Sensor aufgenommene und zu Sensordaten verarbeitete Daten zeitlich gescannt und gefiltert werden. Dieser Filter bezieht sich nur auf Signale für diesen einen Testfall. Dadurch werden aktuell nicht zu testende Steuergeräte bzw. Signale für die aktuell nicht zu testenden Steuergeräte ausgeblendet und nur die Signale, die für den aktuellen Testfall, d. h. für die Durchführung der für ein aktuell zu testendes Steuergerät spezifizierten Überwachungsfunktion notwendig sind, betrachtet.

Die sukzessive Abarbeitung bzw. Durchführung von Überwachungsfunktionen für verschiedene Komponenten eines Steuergeräts oder für verschiedene Steuergeräte macht es aufgrund der Vielzahl der Steuergeräte, die aktuell in einem Kraftfahrzeug verbaut sind, und der darin jeweils enthaltenen Komponenten extrem langwierig und dadurch ineffizient.

Es war nun eine Aufgabe der vorliegenden Erfindung, eine Möglichkeit vorzusehen, ein Testen von einer Mehrzahl von Steuereinheiten einer technischen Einheit schneller und effizienter zu gestalten, insbesondere ein im Wesentlichen paralleles Testen, d.h. ein im Wesentlichen zeitgleiches Testen der Mehrzahl von Steuereinheiten zu ermöglichen.

Zur Lösung dieser Aufgabe wird ein Verfahren und eine Vorrichtung mit den Merkmalen der jeweils unabhängigen Patentansprüche vorgestellt. Ausgestaltungen der Erfindung ergeben sich aus den entsprechenden Unteransprüchen und der Beschreibung.

Es wird ein Verfahren zum Testen von Steuereinheiten einer technischen Einheit vorgeschlagen, bei dem jeder Steuereinheit der Mehrzahl von Steuereinheiten jeweils eine vordefinierte spezifische Überwachungsfunktion zugeordnet wird und zum Testen der Mehrzahl von Steuereinheiten notwendige Daten an mindestens einem Prüfstand von mindestens einem Sensor aufgenommen, zu Sensordaten verarbeitet und an mindestens einen Datenbus zur Weiterleitung abgegeben werden. In Abhängigkeit ihrer Relevanz für die jeweiligen Steuereinheiten werden die jeweiligen Sensordaten einer oder mehreren der vordefinierten und zur Ausführung auf mindestens einer Recheneinheit hinterlegten Überwachungsfunktionen zugeordnet und mit ihrem jeweiligen Eintreten über den Datenbus und eine Schnittstelle der mindestens einen Recheneinheit von den ihnen jeweils zugeordneten Überwachungsfunktionen aufgenommen.

Im Folgenden werden der Einfachheit halber die von dem mindestens einen Sensor bereitgestellten Sensordaten allgemein als Daten bezeichnet.

Unter einer Steuereinheit ist im Rahmen der vorliegenden Offenbarung eine Komponente eines Steuergeräts oder ein Steuergerät selbst zu verstehen. Unter einer technischen Einheit ist im Rahmen der vorliegenden Offenbarung im Falle, dass die Steuereinheiten Komponenten eines Steuergeräts darstellen, das entsprechende Steuergerät oder im Falle, dass die Steuereinheiten Steuergeräte darstellen, bspw. ein Fahrzeug oder eine Industrieanlage oder jede weitere Steuereinheiten umfassende technische Einheit zu verstehen.

Ein Testfall umfasst eine Folge von Überprüfung eines Vorliegens von bestimmten zu erfüllenden Voraussetzungen, bei Vorliegen der Voraussetzungen eine Durchführung von Handlungen und letztlich eine Überwachung und Bewertung der Ergebnisse der Handlungen. Ein Testfall unterteilt sich demnach in drei Abschnitte, nämlich eine "Precondition"-Phase, eine "Action"-Phase und eine "Expected Result"-Phase. Bei der "Precondition"-Phase handelt es sich um ein Überwachen, ob Vorbedingungen, die erfüllt sein müssen, um in die "Action"-Phase zu wechseln, vorliegen. Es erfolgt eine Überwachung der sogenannten "Precondition"-Signale. Sind die Voraussetzungen erfüllt, wird in die "Action"-Phase gewechselt. Die "Action"-Phase umfasst Aktionen, die nach Eintreten der Vorbedingungen ausgelöst werden. Diese Aktionen werden als Signale aufgenommen und beim parallelen Testen mittels mindestens einer Überwachungsfunktion überwacht. Ist die "Action"-Phase abgeschlossen, wird in die nachfolgende "Expected Result"-Phase gewechselt. Die "Expected Result"-Phase überwacht und bewertet Ergebnisse der Handlungen bzw. Aktionen, die in der "Action"-Phase durchgeführt wurden. Die Bewertungen wurden im Vorfeld festgelegt und sind Bestandteil eines jeweiligen Tests.

Das erfindungsgemäße Verfahren ermöglicht eine parallele Überwachung eines parallelen Testens. Diese Technologie der parallelen Überwachung des parallelen Testens kann sich nicht nur auf Steuergeräte im Fahrzeugbau, wie oben exemplarisch angegeben, beziehen, sondern kann vielmehr auch in anderen Bereichen eingesetzt werden. Wie voranstehend beschrieben gehören zu einem Testfall Vorbedingungen und Aktionen, die durchgeführt werden müssen, damit sie in Folge bewertet werden können. Die Trennung von durchzuführenden Aktionen von der eigentlichen Überwachung macht die erfindungsgemäße Parallelisierung möglich.

Erfindungsgemäß ist demnach vorgesehen, dass basierend auf einer Liste von Überwachungsfunktionen, die jeweiligen verschiedenen Steuergeräten bzw. Komponenten von Steuergeräten zugeordnet werden, alle eingehenden Ereignisse in Form von von einem Sensor aufgenommenen Daten entsprechenden Überwachungsfunktionen zugeordnet und zur Durchführung der jeweiligen Überwachungsfunktionen separat bewertet werden. Das bedeutet, dass innerhalb einer bestimmten Zeit eine Vielzahl von Testfällen abgearbeitet und bewertet werden kann. Im gleichen Zeitraum, wie erfindungsgemäß von mindestens einem Sensor aufgenommene und für eine Mehrzahl von Steuereinheiten relevante Daten mit Hilfe von den spezifisch vorgesehenen Überwachungsfunktionen verarbeitet und ausgewertet werden, wurde gemäß dem Stand der Technik nur ein Testfall abgearbeitet. Gemäß dem Stand der Technik wurden, wie voranstehend erwähnt, alle anderen Signale bzw. Daten ausgeblendet und nicht überwacht und bewertet.

Gemäß einer möglichen Ausführungsform des erfindungsgemäßen Verfahrens werden von den jeweiligen Überwachungsfunktionen aufgenommene Daten von den jeweiligen Überwachungsfunktionen verarbeitet und ausgewertet. Ein Verarbeiten und Auswerten der Daten bzw. der Sensordaten umfasst eine Überwachung auf Änderungen und eine Auswertung gemäß zuvor festgelegten Kriterien, sogenannter Testfallkriterien.

In weiterer Ausgestaltung werden die einzelnen Überwachungsfunktionen erst zur Ausführung aktiviert, wenn die ihnen jeweilig zugeordneten Daten in den mindestens einen Datenbus eintreten.

In weiterer Ausgestaltung verfügt jede Überwachungsfunktion über eine eigene Logik, mit deren Hilfe die von der Überwachungsfunktion jeweilig aufgenommenen Daten verarbeitet und ausgewertet werden.

In weiterer Ausgestaltung wird von jeder der Mehrzahl von Überwachungsfunktionen eine Bewertung der den jeweiligen Überwachungsfunktionen zugeordneten Daten als abrufbarer Report bereitgestellt.

Gemäß einer weiteren Ausführungsform des erfindungsgemäßen Verfahrens wird die Mehrzahl der Überwachungsfunktionen auf einem leistungsfähigen Echtzeitrechner implementiert und ausgeführt. Vorzugsweise ist der einzusetzende Echtzeitrechner mit dem mindestens einen Datenbus und einer Recheneinheit mit Eingabe- und Anzeigeeinheit verbunden.

In weiterer Ausgestaltung wird das erfindungsgemäße Verfahren für Steuereinheiten als Komponenten jeweiliger Steuergeräte bzw. als Steuergeräte eines Fahrzeugs ausgeführt. Dabei wird die Mehrzahl von Überwachungsfunktionen in weiterer Ausgestaltung ausgewählt aus einer Gruppe bestehend aus: Überwachungsfunktion ESP, Überwachungsfunktion Kurvenlicht, Überwachungsfunktion Verkehrszeichenerkennung. Weitere Überwachungsfunktionen sind denkbar. Diese hier genannten seien nur beispielhaft genannt.

Die erfindungsgemäße Technologie der "parallelen Überwachung" des "parallelen Testens" kann auch in anderen Bereichen eingesetzt werden.

Ferner betrifft die vorliegende Erfindung eine Testvorrichtung zum Testen einer Mehrzahl von Steuereinheiten/Funktionseinheiten einer technischen Einheit, mit mindestens einer Recheneinheit, auf welcher eine Mehrzahl von vordefinierten Überwachungsfunktionen zur Ausführung hinterlegt sind, wobei jeder Steuereinheit der Mehrzahl von Steuereinheiten jeweils eine vordefinierte spezifische Überwachungsfunktion zuzuordnen ist, mit mindestens einer Schnittstelle, über welche mindestens ein Datenbus anzuschließen bzw. anschließbar ist, wobei über den Datenbus zum Testen der Mehrzahl von Steuereinheiten notwendige und an mindestens einem Prüfstand von mindestens einem Sensor aufgenommene und zu Sensordaten verarbeitete Daten an die mindestens eine Recheneinheit weiterzuleiten sind, wobei die jeweiligen Daten in Abhängigkeit ihrer Relevanz für die jeweiligen Steuereinheiten einer oder mehreren der vordefinierten Überwachungsfunktionen zuzuordnen sind bzw. zugeordnet werden und mit ihrem jeweiligen Eintreten über den Datenbus und die Schnittstelle der mindestens einen Recheneinheit von den ihnen jeweils zugeordneten Überwachungsfunktionen aufzunehmen sind bzw. aufgenommen werden.

In einer möglichen Ausführungsform der erfindungsgemäßen Vorrichtung verfügt jede Überwachungsfunktion über eine eigene Logik, mit deren Hilfe die von der jeweiligen Überwachungsfunktion jeweilig aufgenommenen Daten zu verarbeiten und auszuwerten sind.

In weiterer Ausgestaltung ist jede Überwachungsfunktion dazu ausgelegt ist, nach Auswertung der jeweiligen Daten einen Auswertebericht zu erstellen und zur Anzeige an eine mit der mindestens einen Recheneinheit verbundene Anzeigeeinheit weiterzuleiten. Es ist möglich, dass die Anzeigeeinheit Teil der mindestens einen Recheneinheit ist. Es ist jedoch auch denkbar, dass die Anzeigeeinheit separat von der Recheneinheit ausgestaltet ist und nur mit der mindestens einen Recheneinheit in kommunikativer Verbindung steht. Ferner ist es denkbar, dass die Anzeigeeinheit und/oder die mindestens eine Recheneinheit als mobile Einheiten ausgebildet sind. Ferner ist denkbar, dass an die mindestens eine Recheneinheit eine gegebenenfalls mobile Eingabeeinheit angeschlossen ist, über die ein Nutzer Eingaben oder Abfragen tätigen kann. Als Eingabe ist bspw. eine neue zu implementierende Überwachungsfunktion bzw. ein Testfall denkbar.

Ferner betrifft die vorliegende Erfindung ein Computerprogrammprodukt mit einem computerlesbarem Medium und einem auf dem computerlesbaren Medium gespeicherten Computerprogramm mit Programmcodemitteln, die dazu konfiguriert sind, bei Ablauf des Computerprogramms auf einer Recheneinheit, das voranstehend beschriebene erfindungsgemäße Verfahren, insbesondere in all seinen Ausführungsformen auszuführen.

Weitere Vorteile und Ausgestaltungen der Erfindung ergeben sich aus der Beschreibung und der beiliegenden Zeichnung.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

### Kurzbeschreibung der Zeichnung

Figur 1 zeigt in schematischer Darstellung einen Ablauf eines Testverfahrens nach dem Stand der Technik.
Figur 2 zeigt in schematischer Darstellung einen Ablauf einer Ausführungsform des erfindungsgemäßen Verfahrens.
Figur 3 zeigt in schematischer Darstellung eine Ausführungsform einer erfindungsgemäßen Vorrichtung.

### Ausführliche Beschreibung

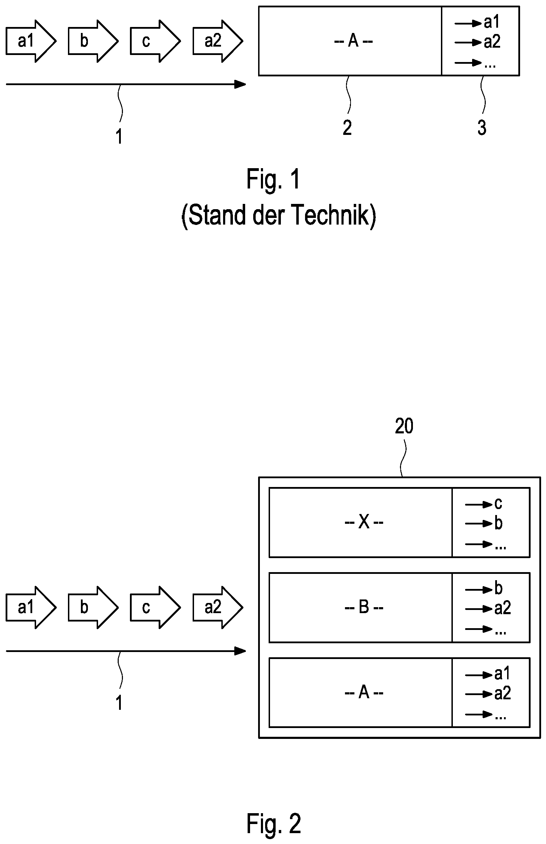

Figur 1 zeigt in schematischer Darstellung, wie ein Verfahren zum Testen von Steuereinheiten einer funktionalen Einheit, wie bspw. eines Kraftfahrzeugs bislang im Stand der Technik durchgeführt wurde. Dazu wurden Daten verschiedenen Typs von mindestens einem Sensor, in der Regel von mehreren Sensoren aufgenommen und zu Sensordaten a1, a2, b und c verarbeitet. Im Folgenden werden die Begriffe "Daten" und "Sensordaten" mit den gleichen Bezugszeichen belegt und auch begrifflich nicht differenziert zueinander verwendet. Unter verschiedenen Typen von Daten ist in diesem Zusammenhang zu verstehen, dass die aufgenommenen Daten bzw. Signale in der Regel nicht für alle zu testenden Steuereinheiten, sondern meist nur für eine oder einen Teil der Mehrzahl von Steuereinheiten relevant sind. Die verschiedenen Typen von Daten sind hier durch die verschiedenen Pfeile a1, b, c und b2 gekennzeichnet, wobei a1 und a2 zum selben Datentypus gehören sollen. Die Daten a1, a2, b und c werden von mindestens einem, in der Regel mehreren Sensoren und in der Regel in einer gewissen zeitlichen Abfolge, wie hier durch den Zeitstrahl 1 angedeutet, aufgenommen. Das bedeutet, dass hier zunächst die Daten a1, darauffolgend die Daten b, darauffolgend die Daten c und zuletzt, wie hier dargestellt, die Daten a2 von einem jeweiligen Sensor aufgenommen und als Sensordaten a1, a2, b und c zur Verfügung gestellt werden. Gemäß dem Stand der Technik werden die auftretenden Daten bzw. Signale a1, b, c und a2 zeitlich gescannt und gefiltert. Durch die Filterung wird berücksichtigt, in welcher Reihenfolge die zu testenden Steuereinheiten zu testen sind, was bedeutet, dass immer diejenigen Daten durch den Filter durchgelassen werden, die für die gemäß einer zuvor zu bestimmenden Reihenfolge aktuell zu testende Steuereinheit relevant sind. Das bedeutet, dass der jeweilige Filter sich nur auf Daten bzw. Signale bezieht, die für die gemäß der zuvor festzulegenden Reihenfolge der durchzuführenden Tests zu testende Steuereinheit von Bedeutung sind. Alle anderen Daten werden für diese durchzuführende Überwachungsfunktion nicht weiter betrachtet. Hier dargestellt ist nun zunächst ein durchzuführender Testfall bei einer Steuereinheit "A", die durch eine von dem Testfall umfasste Überwachungsfunktion 2 zu testen ist. Dieser Überwachungsfunktion 2 zuzuführende Daten werden durch einen vorzuschaltenden Filter auf die Daten reduziert, die für die Steuereinheit "A" bzw. für den durchzuführenden Testfall relevant sind, was im vorliegenden Fall die Daten a1 und a2 sind. Die weiteren Daten b und c werden bei Durchführung der Überwachungsfunktion 2 nicht beachtet. Dies ist kenntlich gemacht in der Auflistung der zu betrachtenden Daten in dem Block 3. Gemäß dem Stand der Technik wird somit eine zeitliche Abfolge von durchzuführenden Testfällen für verschiedene Komponenten bzw. Steuereinheiten einer oder mehrerer technischen Einheiten, wie bspw. von Steuergeräten eines Kraftfahrzeugs festgelegt und ausgeführt.

Figur 2 zeigt demgegenüber eine mögliche Ausführungsform eines erfindungsgemäßen Verfahrens zum Testen einer Mehrzahl von Steuereinheiten mindestens einer technischen Einrichtung wie bspw. eines Steuergeräts in einem Kraftfahrzeug.

Ebenso wie in Figur 1 dargestellt, werden von mindestens einem Sensor Daten aufgenommen, verarbeitet und als Sensordaten bereitgestellt, wobei auch hier die Daten in Abhängigkeit von ihrer jeweiligen Relevanz bei Durchführung eines Testverfahrens für verschiedene Steuereinheiten einer oder mehrerer technischen Einheiten in verschiedene Datentypen a1, a2, b und c unterteilt werden können. Auch hier ist die zeitliche Abfolge durch einen Zeitstrahl 1 dargestellt, was bedeutet, dass zunächst der Sensor Sensordaten a1, nachfolgend die Sensordaten b, darauffolgend die Sensordaten c und darauffolgend wiederum die Sensordaten a2 bereitstellt. Die Sensordaten werden an einen Datenbus (hier nicht dargestellt) abgegeben. Die Sensordaten werden in Abhängigkeit ihrer jeweiligen Relevanz für die jeweiligen Steuereinheiten einer oder mehreren vordefinierten von jeweiligen den jeweiligen Steuereinheiten zugeordneten Testfällen umfassten Überwachungsfunktionen zugeordnet und nunmehr ausgehend von dem Datenbus mit ihrem jeweiligen Eintreten über den Datenbus von denen ihnen jeweils zugeordneten Überwachungsfunktionen aufgenommen. Die jeweiligen Überwachungsfunktionen sind hier zusammengefasst in Block 20 dargestellt, wobei hier beispielhaft drei Überwachungsfunktionen X, B, A dargestellt sind. Die Daten, die für die jeweils den einzelnen Überwachungsfunktionen zugeordneten Steuereinheiten zum Testen derselben von Relevanz sind, werden nunmehr ausgehend von dem Datenbus direkt den einzelnen Überwachungsfunktionen zugeleitet. Im hier vorliegenden Fall sind bspw. für die Durchführung eines Testfalls für die Steuereinheit X die Sensordaten b und c, für die Überwachungsfunktion eines Testfalls für die Steuereinheit B die Sensordaten b und a2, für die Überwachungsfunktion eines Testfalls für die Steuereinheit A die Sensordaten a1 und a2 relevant, so dass die jeweiligen Daten instantan, d. h. mit Eintreffen auf dem Datenbus unmittelbar, über den Datenbus bei Eintreten an die jeweiligen Überwachungsfunktionen übermittelt werden. Die Liste von Überwachungsfunktionen, wie hier dargestellt, ist nur beispielhaft und kann jeweils in Abhängigkeit der Anzahl der zu überwachenden Steuereinheiten beliebig erweitert werden. Basierend auf einer derartigen Liste von Überwachungsfunktionen werden alle eingehenden Daten den jeweiligen Überwachungsfunktionen bzw. den jeweiligen die jeweiligen Überwachungsfunktionen umfassenden Testfällen zugeordnet und separat bearbeitet und, insbesondere nach vordefinierten Kriterien bewertet. Das bedeutet, dass innerhalb einer bestimmten Zeit eine Vielzahl von Testfällen abgearbeitet und, insbesondere nach vordefinierten Kriterien, bewertet werden kann. Das bedeutet, dass Testfälle parallel durchgeführt und nicht nur, wie im Stand der Technik vorgesehen, nacheinander abgearbeitet werden können.

In einem Fahrzeug als beispielhafte technische Einrichtung gibt es viele unabhängige Steuereinheiten, die auf einem gemeinsamen Bus arbeiten. Auftretende Ereignisse in einem Fahrzeug sind in der Regel zeitlich unabhängig und haben eine hohe Varianz. Fährt zum Beispiel ein Fahrzeug geradeaus und wird der Blinker eingeschaltet, so ist festzustellen, dass die Funktion bzw. Steuereinheit "Motor" mit der Funktion bzw. Steuereinheit "Blinker" nichts zu tun hat. Egal ob sich das Fahrzeug bewegt, der Blinker muss unabhängig davon getestet werden. Das bedeutet, dass eine Vielzahl von eigenständigen Steuereinheiten bzw. Systemen gleichzeitig und unabhängig voneinander überwacht werden müssen.

Erfindungsgemäß ist das zu testende Objekt ein reales Echt-System, bspw. in Form eines Fahrzeugs oder eines Prüfstands mit echten Steuergeräten. Dabei werden Komponenten, d. h. Steuergeräte in einem Gesamtsystem, d. h. bspw. einem Fahrzeug oder einem Prüfstand, getestet.

Wie bereits voranstehend beschrieben, sind die einzelnen zu testenden Komponenten bzw. Steuereinheiten autarke Systeme, die erfindungsgemäß nunmehr gleichzeitig getestet werden. In einem Fahrzeug gibt es keinen vorgeschriebenen Ablaufplan. Die Komponenten bzw. Steuereinheiten eines Fahrzeugs verhalten sich während einer Fahrt immer entsprechend einer aktuellen Situation. Mithilfe des erfindungsgemäßen Verfahrens werden die einzelnen Steuereinheiten und deren Verbund gegen eine vordefinierte Spezifikation getestet. Ein hierbei zu verwendendes Testmodell, gegen das getestet wird, ist kein Umgebungsmodell, sondern ein aus der vordefinierten Spezifikation abgeleitetes Gutmodell eines Verhaltens des Gesamtverbundes, d. h. bspw. des Fahrzeugs. Die Umgebung, in der sich das zu testende Objekt, d. h. bspw. das Fahrzeug, bewegt, steuert ein Tester selbst. Ein zentraler Bestandteil des parallelen Testens ist ein jeweiliger Beobachter, der das Gutmodell gegen das reale System, d. h. bspw. das Fahrzeug, permanent prüft, während der Tester die Umgebungsbedingungen willkürlich ändert.

Das zu testende Objekt ist in der Regel hoch dynamisch, wie bspw. ein Fahrzeug. Bei einem Fahrzeug gibt es, wie bereits erwähnt, keinen vorgeschriebenen Ablaufplan, weil Situationen auf Straßen nicht vorhersehbar sind.

Die einzelnen zu testenden Komponenten bzw. Steuereinheiten des Fahrzeugs bzw. des zu testenden Objekts sind autarke Systeme, die in einem Verbund arbeiten. Eine Zusammenarbeit dieser einzelnen Komponenten ist dabei nicht zwingend notwendig. Die einzelnen zu testenden Komponenten sind jeweilig einzelnen Überwachungsfunktionen und entsprechend dazu jeweils einzelnen Testfällen zugeordnet.

Handelt es sich bei der technischen Einrichtung, d. h. des zu testenden Objekts, bspw. um ein Kraftfahrzeug, so umfasst dieses eine Mehrzahl von Steuereinheiten, die bei Betrieb des Kraftfahrzeugs unabhängig voneinander oder auch zumindest zum Teil in Abhängigkeit voneinander operieren.

So umfasst ein reales Kraftfahrzeug oder ein Prüfstand mit realen Bauteilen, d. h. mit Echt-Teilen bzw. Steuergeräten als Steuereinheiten, bspw. ein Blinker-System, ein Motor-System, ein Getriebe-System etc., wobei das Motor-System und das Getriebe-System in Abhängigkeit voneinander operieren.

Diese Mehrzahl von Steuereinheiten soll nun im Kraftfahrzeug- und/oder Prüfstandverbund getestet werden, wobei jedoch die Steuereinheiten zwar im Verbund operieren, nicht alle aber zwingend in Abhängigkeit von anderen Steuereinheiten. Manche der Steuereinheiten, wie bspw. das Blinker-System, sind auch völlig autark und lediglich über einen Kommunikationsbus mit den anderen Steuereinheiten gekoppelt.

Zum Testen der Steuereinheiten werden dazu notwendige Daten, die bei Betrieb des realen Kraftfahrzeugs bzw. des Prüfstands erzeugt werden, als Sensordaten von mindestens einem Sensor aufgenommen und an den Kommunikations- bzw. Datenbus, bspw. einen CAN-Bus übermittelt, von wo sie in Abhängigkeit ihrer Relevanz für die jeweiligen Steuereinheiten einer oder mehreren für die jeweiligen Steuereinheiten vordefinierten und zur Ausführung auf mindestens einer Recheneinheit hinterlegten Überwachungsfunktionen, d. h. damit verbundenen Testfällen, zugeordnet und von denen ihnen jeweilig zugeordneten Überwachungsfunktionen abgerufen bzw. aufgenommen werden.

Die jeweiligen Überwachungsfunktionen werden auf Basis der ihnen jeweils zugeordneten und an sie übermittelten Daten parallel durchgeführt, wodurch eine entsprechende Vielzahl an Testfällen parallel abgearbeitet und bewertet wird.

Dabei gibt es keinen vorgeschriebenen Ablaufplan, gemäß welchem die einzelnen Steuereinheiten getestet bzw. die für sie jeweils relevanten Daten aufgenommen, verarbeitet und bewertet werden, da alle Daten mit ihrem Eintreten bzw. Ankommen auf dem Datenbus automatisch an je nach ihrer Relevanz für jeweilige Steuereinheiten eine oder mehrere Überwachungsfunktionen weitergeleitet bzw. von diesen aufgenommen werden, wobei die jeweiligen Überwachungsfunktionen, falls ihnen jeweils zuzuordnende Daten gleichzeitig auf dem Kommunikationsbus eintreffen, parallel ausgeführt werden und die Resultate ausgewertet werden und dadurch die den jeweiligen Überwachungsfunktionen zugeordneten Steuereinheiten parallel getestet werden.

Das bedeutet, dass eine Vielzahl von Testfällen parallel ausgeführt wird.

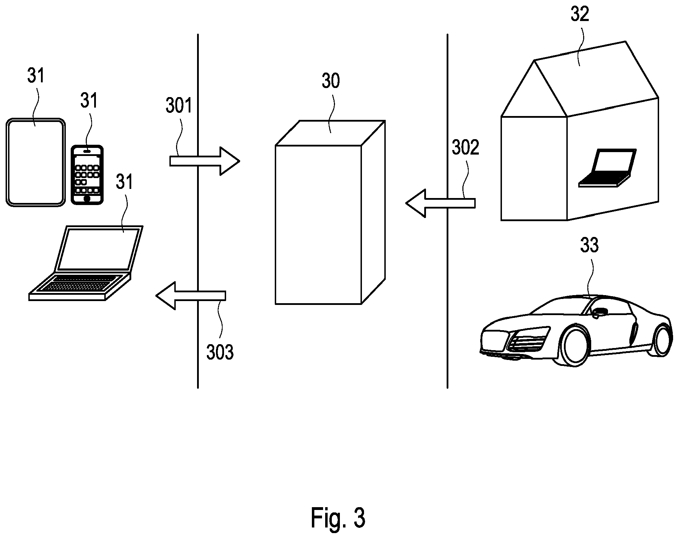

Figur 3 zeigt in schematischer Darstellung, wie eine Ausführungsform der erfindungsgemäßen Vorrichtung arbeitet. Die erfindungsgemäße Vorrichtung umfasst in der Regel als mindestens eine Recheneinheit einen leistungsstarken Echtzeitrechner 30. Dieser kann stationär oder mobil sein. Über Eingabegeräte 31 werden, wie durch Pfeil 301 angedeutet, seitens eines Nutzers Testfälle eingegeben und vordefiniert und an den Echtzeitrechner 30 übergeben. Diese Testfälle umfassen jeweilig ihnen zugeordnete Überwachungsfunktionen. Die Testfälle zusammen mit den ihnen zugeordneten Überwachungsfunktionen werden auf dem Echtzeitrechner 30 zur Ausführung hinterlegt. Zu überwachende Steuergeräte befinden sich allgemein an industriellen Prüfstellen 32 oder in Fahrzeugen, insbesondere in sogenannten Testfahrzeugen 33. Von der erfindungsgemäßen Vorrichtung in Ausgestaltung ferner umfasste Sensoren (hier nicht dargestellt) detektieren fortlaufend Sensordaten der einzelnen Steuergeräte oder von einzelnen Steuergerätekomponenten und übermitteln diese Sensordaten an einen Datenbus. Ausgehend von diesem Datenbus werden die Sensordaten über eine von der Vorrichtung umfassten Schnittstelle, wie durch Pfeil 302 angedeutet, unmittelbar auf die den einzelnen Steuergeräten zugeordneten Testfälle verteilt. Sobald die jeweiligen Sensordaten auf dem Datenbus aufgetreten sind, werden sie von den jeweiligen Testfällen aufgenommen, und die in den jeweiligen Testfällen umfassten Überwachungsfunktionen werden aktiviert. Durch die Durchführung der jeweiligen Überwachungsfunktionen werden die Sensordaten analysiert und auf Änderungen überwacht und entsprechend ausgewertet. Von dem Echtzeitrechner 30 werden entsprechende Auswerteprotokolle bereitgestellt, die, wie durch Pfeil 303 angedeutet, entweder von einem Eingabegerät 31 abgerufen werden können oder aber von dem Rechner 30 an ein Eingabegerät 31 automatisch übermittelt werden. Generell kann die erfindungsgemäße Vorrichtung bzw. das erfindungsgemäße Verfahren in allen Bereichen der Industrie, bei denen Busereignisse bei ihrem Auftreten in verschiedenen Überwachungsfunktionen bewertet werden müssen, eingesetzt werden.

## Patentansprüche

1. Verfahren zum Testen einer Mehrzahl von Steuereinheiten einer technischen Einheit, bei dem jeder Steuereinheit der Mehrzahl von Steuereinheiten jeweils eine vordefinierte spezifische Überwachungsfunktion (A, B, ..., X) zugeordnet wird und zum Testen der Mehrzahl von Steuereinheiten notwendige Daten an mindestens einem Prüfstand (32, 33) von mindestens einem Sensor aufgenommen, zu Sensordaten (a1, a2, b, c) verarbeitet und an mindestens einen Datenbus zur Weiterleitung abgegeben werden, wobei die jeweiligen Sensordaten (a, a2, b, c) in Abhängigkeit ihrer Relevanz für die jeweiligen Steuereinheiten einer oder mehreren der vordefinierten und zur Ausführung auf mindestens einer Recheneinheit (30) hinterlegten Überwachungsfunktionen (A, B, ..., X) zugeordnet und mit ihrem jeweiligen Eintreten über den Datenbus und eine Schnittstelle der mindestens einen Recheneinheit (30) von den ihnen jeweils zugeordneten Überwachungsfunktionen (A, B, ..., X) aufgenommen, verarbeitet und ausgewertet werden.

2. Verfahren nach Anspruch 1, bei dem die einzelnen Überwachungsfunktionen (A, B, ..., X) erst zur Ausführung aktiviert werden, wenn die ihnen jeweilig zugeordneten Sensordaten (a1, a2, b, c) in den mindestens einen Datenbus eintreten.

3. Verfahren nach Anspruch 1 oder 2, bei dem jede Überwachungsfunktion (A, B, ..., X) über eine eigene Logik verfügt, mit deren Hilfe die von der jeweiligen Überwachungsfunktion (A, B, ..., X) jeweilig aufgenommenen Sensordaten (a1, a2, b, c) verarbeitet und ausgewertet werden.

4. Verfahren nach Anspruch 3, bei dem von jeder der Mehrzahl von Überwachungsfunktionen (A, B, ..., X) eine Bewertung der der jeweiligen Überwachungsfunktion (A, B, ..., X) zugeordneten Sensordaten (a1, a2, b, c) als abrufbarer Report bereitgestellt wird.

5. Verfahren nach einem der voranstehenden Ansprüche, bei dem die Mehrzahl der Überwachungsfunktionen (A, B, ..., X) auf einem leistungsfähigen Echtzeitrechner (30) implementiert und ausgeführt werden.

6. Verfahren nach Anspruch 5, bei dem der Echtzeitrechner (30) mit dem mindestens einen Datenbus und einer Recheneinheit (31) mit Eingabe- und Anzeigeeinheit verbunden wird.

7. Verfahren nach einem der voranstehenden Ansprüche, das für Steuergeräte eines Fahrzeugs (33) ausgeführt wird.

8. Verfahren nach Anspruch 7, bei dem die Mehrzahl an Überwachungsfunktionen (A, B, ..., X) ausgewählt werden aus der Gruppe bestehend aus: Überwachungsfunktion ESP, Überwachungsfunktion Kurvenlicht, Überwachungsfunktion Verkehrszeichenerkennung.

9. Computerprogrammprodukt mit einem computerlesbaren Medium und einem auf dem computerlesbaren Medium gespeicherten Computerprogramm mit Programmcodemitteln, die dazu konfiguriert sind, bei Ablauf des Computerprogramms auf einer Recheneinheit (30), ein Verfahren nach einem der voranstehenden Ansprüche auszuführen.

10. Testvorrichtung zum Testen einer Mehrzahl von Steuereinheiten einer technischen Einheit, mit mindestens einer Recheneinheit (30), auf welcher eine Mehrzahl von vordefinierten Überwachungsfunktionen (A, B, ..., X) zur Ausführung hinterlegt sind, wobei jeder Steuereinheit der Mehrzahl von Steuereinheiten jeweils eine vordefinierte spezifische Überwachungsfunktion (A, B, ..., X) zuzuordnen ist, mit mindestens einer Schnittstelle, über welche mindestens ein Datenbus anzuschließen ist, wobei über den Datenbus zum Testen der Mehrzahl von Steuereinheiten notwendige und an mindestens einem Prüfstand (32, 33) von mindestens einem Sensor aufgenommene und zu Sensordaten (a1, a2, b, c) verarbeitete Daten an die mindestens eine Recheneinheit (30) weiterzuleiten sind, wobei die jeweiligen Sensordaten (a1, a2, b, c) in Abhängigkeit ihrer Relevanz für die jeweiligen Steuereinheiten einer oder mehreren der vordefinierten Überwachungsfunktionen (A, B, ..., X) zuzuordnen und mit ihrem jeweiligen Eintreten über den Datenbus und die Schnittstelle der mindestens einen Recheneinheit (30) von den ihnen jeweils zugeordneten Überwachungsfunktionen (A, B, ..., X) aufzunehmen sind, wobei jede Überwachungsfunktion (A, B, ..., X) über eine eigene Logik verfügt, mit deren Hilfe die von der jeweiligen Überwachungsfunktion (A, B, ..., X) jeweilig aufgenommenen Sensordaten (a1, a2, b, c) zu verarbeiten und auszuwerten sind.

11. Vorrichtung nach Anspruch 10, bei der jede Überwachungsfunktion (A, B, ..., X) dazu ausgelegt ist, nach Auswertung der jeweiligen Sensordaten (a1, a2, b, c) einen Auswertebericht zu erstellen und zur Anzeige an eine mit der mindestens einen Recheneinheit (30) verbundene Anzeigeeinheit (31) weiterzuleiten.

12. Vorrichtung nach einem der Ansprüche 10 oder 11, bei der der mindestens eine Sensor Teil der Vorrichtung ist.
